(19) Europäisches Patentamt
European Patent Office
Office européen des brevets

(11) **EP 1 593 552 B1**

(12) **EUROPÄISCHE PATENTSCHRIFT**

(45) Veröffentlichungstag und Bekanntmachung des Hinweises auf die Patenterteilung:
**07.03.2007 Patentblatt 2007/10**

(51) Int Cl.:
**B60R 16/02** *(2006.01)*     **B60D 1/30** *(2006.01)*

(21) Anmeldenummer: **05102997.3**

(22) Anmeldetag: **15.04.2005**

(54) **Überwachung eines PKW-Anhängers mit einer Rückfahrkamera**

System and method for monitoring a car trailer

Procédé et dispositif pour surveiller une remorque de véhicule

(84) Benannte Vertragsstaaten:
**DE FR NL SE**

(30) Priorität: **05.05.2004 DE 102004022113**

(43) Veröffentlichungstag der Anmeldung:
**09.11.2005 Patentblatt 2005/45**

(73) Patentinhaber: **ROBERT BOSCH GMBH**
**70442 Stuttgart (DE)**

(72) Erfinder: **Haug, Karsten**
**70372, Stuttgart (DE)**

(56) Entgegenhaltungen:
**EP-A- 1 182 089        DE-A1- 19 901 953**
**US-A1- 2002 149 673        US-B1- 6 690 413**

• **PATENT ABSTRACTS OF JAPAN Bd. 2003, Nr. 09, 3. September 2003 (2003-09-03) & JP 2003 148938 A (HINO MOTORS LTD), 21. Mai 2003 (2003-05-21)**

**Beschreibung**

Stand der Technik

Die Erfindung geht aus von einem System und Verfahren zur Überwachung von Kraftfahrzeuganhängern im Fahrbetrieb, wobei insbesondere die relative Ausrichtung von Zugfahrzeugheckbereich und Anhängerfrontbereich bei Personenkraftfahrzeuggespannen überwacht wird.

Fahrzeuggespanne aus Zugfahrzeug und Anhänger sind besonders unfallträchtig. Der Anhänger kann sich während der Fahrt aufschaukeln und dann nur noch schwierig unter Kontrolle zu bringen sein. Insbesondere Personenkraftfahrzeuge mit Anhängern wie beispielsweise Wohnwagen neigen oberhalb bestimmter kritischer Geschwindigkeiten zu instabilem Fahrverhalten. Hierbei kann der Anhänger periodische, sich aufschaukelnde Pendelbewegungen um die Anhängerkupplung des Zugfahrzeugs vollziehen, oder auch plötzlich aus der Spur ausbrechen. Diese Gefahren bestehen verstärkt auf Gefällstrecken, weil hier die Geschwindigkeitszunahme oft vom Fahrer nicht bemerkt, oder auch absichtlich herbeigeführt wird. Auch Windstöße von vorbeifahrenden Fahrzeugen oder auf Brücken können das Gespann außer Kontrolle geraten lassen. Dieses kann zumeist bei unerfahreneren Fahrern dazu führen, dass sie die Beherrschung über das Gespann verlieren, was beispielsweise zu unkontrollierbarem Schleudern und "Einknicken" des Anhängers führen kann. Durch rechtzeitiges Bremsen in einer solchen Situation könnte das Gespann wieder stabilisiert werden.

Verschiedene Systeme sind zur Überwachung eines Gespanns im Fahrbetrieb bekannt. In dem von der Firma Opel im Internet unter opel.automagazin24.de/astra/astra2003/index.htm am 12.09.03 offenbarte Trailer Stability Program (TSP) wird ein Gespann über das ESP des Zugfahrzeugs stabilisiert. Bei Detektion einer kritischen Fahrsituation leitet das TSP-System gewisse Maßnahmen zur Stabilisierung automatisch ein. Das TSP-System misst aber nur Fahrdynamikdaten im Zugfahrzeug selbst, sodass eine stets aktuelle Anhängerorientierung dem System nicht vorliegt. Die lediglich indirekte Messung der Instabilität des Anhängers aus den Fahrdynamikdaten des Zugfahrzeugs ist in ihrer Berechnung aufwändig und in nachteiliger Weise relativ ungenau.

In der deutschen Offenlegungsschrift DE 19901953 ist ein System zur Überwachung eines Gespanns im Fahrbetrieb offenbart, das den Anhänger direkt beobachtet. Auf Basis von mindestens zwei Ultraschallsensoren wird dabei der Abstand zu bestimmten Punkten des Anhängers und daraus abgeleitet die Frequenz und Amplitude des Gierwinkels des Anhängers überwacht und aus den so ermittelten Werten auf ein instabiles Verhalten des Gespanns geschlossen. Der Gierwinkel wird aber nur indirekt aus zwei mittels Ultraschallsensoren ermittelten Abstandswerten berechnet. Diese indirekte Bestimmung des Gierwinkels hat den Nachteil, dass aufgrund von Inhomogenitäten der Frontwand des Anhängers, wie beispielsweise durch ein aufgeflanschtes Reserverad, die Funktion Abstand-über-Gierwinkel nicht mehr stetig und nicht mehr monoton verläuft. So können irrtümlich völlig falsche Gierwinkel berechnet werden, insbesondere wenn die Reliefstrukturdaten der Anhängerfrontwand dem System nicht bekannt sind.
Des Weiteren bietet das Verfahren in DE 19901953 keine Lösung gegen ein einmaliges Ausbrechen sowie gegen Instabilitäten wegen Nick- und/oder Kippbewegungen des Anhängers.

In der japanischen gattungsgemässen Patentschrift JP 2003-148938 wird für einen Sattelschlepper ein Verfahren zur direkten Messung des Gierwinkels mit einer Videokamera offenbart. Hierzu wird eine Kontrastplatte waagerecht so vor der Kupplung an der Zugmaschine angebracht, dass diese vom Auflieger des Anhängers teilweise verdeckt wird. Die Kontrastplatte trägt ein von einem passenden Bildverarbeitungsalgorithmus einfach zu detektierendes Muster. Die Vorderkontur des Aufliegers wird als Randlinie des sichtbaren Musters der Kontrastplatte detektiert. Diese Randlinie ändert sich in Abhängigkeit vom Gierwinkel zwischen Zugfahrzeug und Anhänger.

Nachteilig an dem Verfahren in JP 2003-148938 ist, dass eine am Zugfahrzeug befestigte Kontrastplatte zur Winkelbestimmung benötigt wird. Bei Personenkraftfahrzeugen befindet sich unter der hinter der Deichsel relativ weit vom Zugfahrzeug entfernten Anhängervorderkante nur die Straße. Eine Kontrastplatte müsste deshalb unter der Anhängerkupplung weit auskragend montiert werden, was zusätzlichen Aufwand sowie mangelnde Akzeptanz beim Fahrer zur Folge hätte.
Des Weiteren ist das System in JP 2001-350349 erfindungsgemäß lediglich für den Rangierbetrieb und nicht für eine Überwachung des Anhängers bei höheren Fahrgeschwindigkeiten vorgesehen.

Vorteile der Erfindung

Mit den Maßnahmen der unabhängigen Ansprüche wird ein kostengünstiges verbessertes System und Verfahren zur Überwachung von Kraftfahrzeuganhängern bereitgesellt, das im Fahrbetrieb für beliebige Anhänger zuverlässig Informationen über den momentanen Ausrichtungswinkel bestimmt, und eine Aussage über die Stabilität des aktuellen Fahrzustandes des Gespanns zur fahrbetriebsrelevanten Weiterverarbeitung abgibt. Auf die Patentansprüche soll im Folgenden Bezug genommen werden.

Gemäß ihrem allgemeinsten Aspekt offenbart die vorliegende Erfindung ein System zur Überwachung von Kraftfahrzeuganhängern im Fahrbetrieb, mit einer

a) Kamera-Einrichtung zur bildlichen Erfassung der relativen Ausrichtung von Zugfahrzeugheckbereich und Anhängerfrontbereich, die beispielsweise eine ohnehin bereits am Fahrzeug vorhandene Rückfahrkamera sein kann,

b) einem Auswertesubsystem für die erfassten Daten

c) und Schnittstellen zur fahrbetriebsrelevanten Weiterverarbeitung der ausgewerteten Daten,

das erfindungsgemäß dadurch gekennzeichnet, dass in dem Auswertesubsystem ein oder mehrere, jeweils eine bestimmte relative Ausrichtung definierende Templates speicherbar sind, die dem Auswertesubsystem als Referenzdaten für zugehörige Ausrichtungswinkel des Fahrzeuggespanns dienen, und das Auswertesubsystem durch Programmierung eingerichtet ist zur Durchführung von Korrelationen zwischen Bildern der jeweils aktuell erfassten, relativen Ausrichtung und des/den Templates(n), um Informationen über den momentanen Ausrichtungswinkel zwischen den Längs- und/oder Querachsen und/oder Hochachsen von Zugfahrzeug und Anhänger zu bestimmen, und um Ausrichtungswinkel, die auf eine kritische Fahrsituation hindeuten, zu erkennen und um entsprechende Signale an die Schnittstellen zur fahrbetriebsrelevanten Weiterverarbeitung zu übermitteln.

Zu dem Zugfahrzeugheckbereich zählen erfindungsgemäß die Rückseite des Zugfahrzeugs sowie dessen Anhängerkupplungsbereich. Der Anhängerfrontbereich umfasst die Deichsel und die Frontwand des Anhängers.

Der Ausrichtungswinkel kann Informationen über den Gier-, Nick- und/oder Wankwinkel zwischen den Längs- und/oder Querachsen von Zugfahrzeug und Anhänger enthalten. Er kann auch eingeschränkt sein auf eine Teilmenge dieser Winkel. Dabei sind die Längsachsen die mittig in Längsrichtung des jeweiligen Fahrzeugs verlaufenden, sich an der Anhängerkupplung treffenden Achsen. Der Gierwinkel definiert den Winkel zwischen den Längsachsen von Zugfahrzeug und Anhänger. Die Querachse liegt senkrecht zur jeweiligen Längsachse parallel zur Unterkante des jeweiligen Fahrzeugaufbaus. Der Wankwinkel definiert den Winkel zwischen den Querachsen von Zugfahrzeug und Anhänger. Die Hochachse liegt senkrecht zur Längs- und Hochachse und liegt daher beispielsweise parallel zur A-Säule (Zugfahrzeug) bzw. vertikalen Außenkante des Anhängers. Der Nickwinkel definiert den Winkel zwischen den Hochachsen von Zugfahrzeug und Anhänger.

Erfindungsgemäß in einem Auswertesubsystem gespeicherte Templates enthalten komplette Bilder oder lediglich auf signifikante Linien und Punkte reduzierte Abbildungen, denen bestimmte, vordefinierte, relative Ausrichtungen des Zugfahrzeugheckbereichs und Anhängerfrontbereichs zugeordnet sind. Mittels erfindungsgemäßen Korrelationen zwischen Bildern der aktuell erfassten, relativen Ausrichtung und des/den Templates(n) (Template-Matching), lassen sich im Fahrbetrieb einfach, ohne am Fahrzeug montierte Hilfsmittel für beliebige Anhänger auf direkte Weise Informationen über den momentanen Ausrichtungswinkel ermitteln. Durch dieses erfindungsgemäße Template-Matching ist das System problemlos für beliebige Formen des Anhängerfrontbereichs und des Zugfahrzeugheckbereichs geeignet.

Das System erkennt erfindungsgemäß auf eine kritische Fahrsituation hindeutende Ausrichtungswinkel und übermittelt entsprechende Signale an Schnittstellen zur fahrbetriebsrelevanten Weiterverarbeitung. Solche Weiterverarbeitungen sind beispielsweise vorbestimmte Maßnahmen zur Vermeidung von Unfällen, wie zum Beispiel eine automatische Bremsung oder die Ausgabe von Warnhinweisen an den Fahrer, wie etwa "Bremsen Sie leicht, um Ihr Gespann zu stabilisieren".

In den Unteransprüchen sind vorteilhafte Ausgestaltungen Weiterbildungen und Verbesserungen des jeweiligen Gegenstandes der Erfindung angegeben.

Gemäß einer vorteilhaften Ausgestaltung der vorliegenden Erfindung sind eine Vielzahl, unterschiedliche Ausrichtungen definierende Templates für einen "IF-Abgleich" bei der Korrelation mit dem momentanen Kamerabild gespeichert. Dabei wird nur einmal eine Vielzahl von Templates im Zuge des Referenzierungsvorgangs abgespeichert, um ausreichend viele Vorlagen für verschiedene Ausrichtungswinkel zu erhalten. Dieses spart Rechenzeit während der Ermittlung des momentanen Ausrichtungswinkels, denn das aktuelle Kamerabild oder das Template brauchen dabei nicht gedreht zu werden.

Eine vorteilhafte Weiterbildung der vorliegenden Erfindung stellt eine Einrichtung zur Erfassung des momentanen Lenkwinkels dar. Wenn der aktuelle Lenkwinkel bekannt ist, lässt sich für eine stabile Kurvenfahrt insbesondere der richtige Gierwinkel zwischen Zugfahrzeug und Anhänger in Abhängigkeit zum Lenkwinkel bestimmen. Diese Beziehung erlaubt eine verbesserte Aussage über die Fahrzeugstabilität für einen momentan gemessenen Ausrichtungswinkel.

Gemäß einer weiteren, vorteilhaften Ausgestaltung der vorliegenden Erfindung enthalten die ermittelten Winkelinformationen vor allem zur Erfassung von Schleuderbewegungen Informationen über den momentanen Gierwinkel zwischen den Längsachsen von Zugfahrzeug und Anhänger. Der Gierwinkel lässt sich besonders gut durch die bildliche Erfassung des Anhängerkupplungsbereichs des Zugfahrzeugheckbereichs und eines Teils der Deichsel des Anhängerfrontbereichs ermitteln, denn der momentane Gierwinkel kann so direkt ohne die Notwendigkeit von Abstandsinformationen mittels Template-Matching bestimmt werden.

Eine weitere vorteilhafte Weiterbildung der vorliegenden Erfindung stellt die Erfassung von Winkelinformationen dar, die Informationen über den momentanen Wank- und/oder Nickwinkel zwischen Quer- und/oder Hochachsen von Zugfahrzeug und Anhänger enthalten. Mit Messung des Wankwinkels lassen sich seitliche Kippbewegungen und mit Ermittlung des Nickwinkels zu Fahrinstabilität führende Nickbewegungen des Anhängers detektieren.

Diese Winkelinformationen lassen sich besonders gut mittels Template-Korrelationsauswertung signifikanter Punkte und/oder Linien und/oder signifikanter Bildmuster eines von der Kamera-Einrichtung erfassten Ausschnitts der gegenüberliegenden Wand eines Fahrzeugs des Gespanns, insbesondere der dem Zugfahrzeug gegenüberliegenden Wand, ermitteln. So lässt sich ein Nickwinkel bei bekannten Abstandsinformationen einfach durch eine Vertikalverschiebung der Linie der vorderen Anhängerunterkante bestimmen.

Der Wankwinkel wird auf ähnlich einfache Weise durch Messung der Drehung beispielsweise der Anhängerunterkantenlinie bestimmt, wobei wegen der geometrischen Abhängigkeit der Position der Anhängerunterkante im Kamerabild sowohl vom Wankwinkel als auch vom Gierwinkel zusätzlich stets der Gierwinkel bekannt sein muss. Dies ist dann relevant, wenn der Gierwinkel aufgrund einer Kurvenfahrt ungleich Null ist, und gleichzeitig der Wankwinkel aufgrund eines ggf. platten Reifens am Anhänger ebenfalls ungleich Null ist. Ist die Deichsel im Kamerabild in Geradeausstellung (Gierwinkel= Null) und die Anhängerunterkante schräg (platter Reifen), so befindet sich das Gespann in Geradeausfahrt, bei Wankwinkel ungleich Null. Ist jedoch sowohl die Deichsel schräg als auch die Anhängerstirnwand, dann liegt ein Gierwinkel ungleich Null vor, und es ist nicht allein der Wankwinkel, der die Stirnfläche schräg erscheinen lässt. Zur exakten Berechnung des Wankwinkels muß in diesem Fall der Gierwinkel bekannt sein.

Gemäß einer weiteren, vorteilhaften Weiterbildung der vorliegenden Erfindung enthält das System einen Lichtschnittprojektor, der eine Lichtlinie zur aktiven Beleuchtung aufspannt (Meßprinzip: aktive Lasertriangulation), und dessen linienartige Bilder im Anhängerfrontbereich im Auswertesubsystem ausgewertet werden. Damit können einerseits gut sichtbare Linien als Markierungen eingesetzt werden und andererseits die Winkelberechnungen mittels aktiver Triangulation unterstützt werden. Das Lichtschnittverfahren lässt sich vorteilhaft bei Dunkelheit einsetzen, da es weitgehend unabhängig von der Tageshelligkeit funktioniert. Weiter ist die linienhafte Information leicht aus dem Kamerabild extrahierbar und mit wenig Rechenaufwand auswertbar, und es besteht eine hohe Detektionssicherheit. Vorteilhaft ist weiterhin, dass die Wankwinkelmessung von der Gierwinkelmessung entkoppelt ist. Der Wankwinkel kann also direkt gemessen werden ohne dass der Gierwinkel oder weitere Parameter wie die Deichsellänge bekannt sein müssen.

Das Lichtschnittverfahren kann alternativ oder in Ergänzung des Deichseltemplate Matching eingesetzt werden. Einen zusätzlichen Vorteil bei der erfindungsgemäßen Prüfung, ob der Gierwinkel im Verhältnis zum Lenkwinkel innerhalb von für eine stabile Kurvenfahrt vorbestimmten, erlaubten Grenzen liegt, bietet die Ermittlung der für diese Winkelverhältnisbeziehung eingehende Deichsellänge mit Hilfe der gemessenen Gier- und Lenkwinkel während einer vorangehenden stabilen Kurvenfahrt. Dabei ist die Deichsellänge der Abstand des Anhängerkupplungsaufnahmepunkts zur Anhängerradachse. Ein direktes Ausmessen der Deichsellänge ist damit unnötig. Sie kann so bequem automatisch im Laufe einer Kalibrierfahrt oder einer Referenzfahrt zur Aufnahme der Templates bestimmt werden. Referenzfahrten sind z.B. Fahrten mit niedriger Geschwindigkeit und quasistationärem Winkel, so dass von stabilen Verhältnissen ausgegangen werden kann. Nach der Referenzierung ist das System verfügbar.

Zeichnungen

Anhand der Zeichnungen werden Ausführungsbeispiele der Erfindung erläutert.

Es zeigen

Fig. 1    eine Blockdarstellung eines Ausführungsbeispiels des erfindungsgemäßen Systems zur Überwachung eines Kraftfahrzeuganhängers;

Fig. 2    ein Flussdiagramm eines Ausführungsbeispiels des erfindungsgemäßen Verfahrens zur Überwachung eines Kraftfahrzeuganhängers;

Fig. 3    eine schematische Skizze einer Teilansicht des Gespanns mit Anhängerdeichsel aus der Vogelperspektive zur Darstellung eines Beispiels der erfindungsgemäßen Erfassung des Gierwinkels;

Fig. 4    eine schematische Skizze einer Anhängerfrontwand zur Darstellung eines Beispiels der erfindungsgemäßen Erfassung des Nickwinkels, und

Fig. 5    eine schematische Skizze einer Anhängerfrontwand zur Darstellung eines Beispiels der erfindungsgemäßen Erfassung des Wankwinkels.

Beschreibung von Ausführungsbeispielen

In den Figuren bezeichnen gleiche Bezugszeichen gleiche oder funktionsgleiche Komponenten.

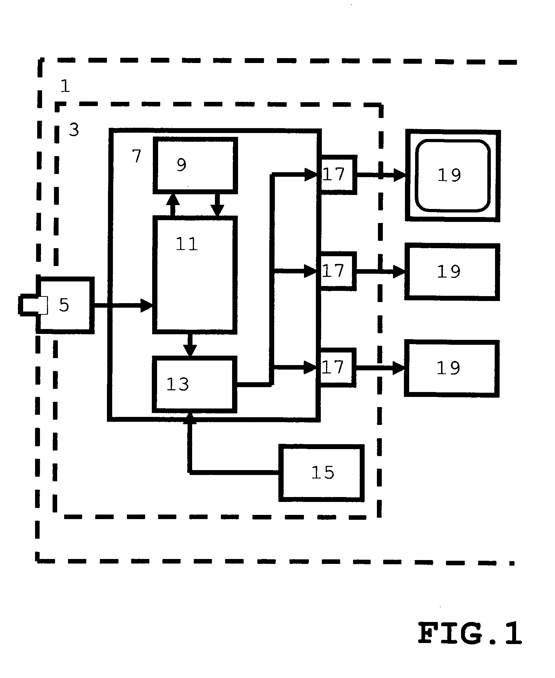

In **Fig. 1** ist ein Ausführungsbeispiel des erfindungsgemäßen Systems 3 zur Überwachung eines Kraftfahrzeuganhängers als schematische Blockdarstellung gezeigt. Das Überwachungssystem 3 umfasst eine im Heck (schematisch) des Zugfahrzeugs 1 zur Beobachtung eines Anhängers angebrachte Videokamera 5. Die aktuellen, digitalen Bilddaten gelangen von der Kamera-Einrichtung 5 zu einer Auswertesubeinheit 7. Dort werden sie erfindungsgemäß in einer Rechenvorrichtung 11 mit in einem Datenspeicher 9 gespeicherten Templates, also mit im Rahmen von in Referenzfahrsituationen gespeicherten Bildern, oder auf markante Punkte oder Linien des Deichselbereichs reduzierte Schablonen des Kamerabildbereichs auf Korrelationen hin überprüft (Tamplate-Matching), um den Ausrichtungswinkel des Anhängers zum Zugfahrzeug 1 zu ermitteln. Die Rechenvorrichtung 11 ist beispielsweise ein herkömmlicher, entsprechend programmierter Computerchip, oder ein spezielles ASIC oder FPGA Bauelement.

Die Rechenvorrichtung 11 übermittelt den so bestimmten Ausrichtungswinkel an eine dem Auswertungssubsystem 7 zugeordnete Auswerteeinheit 13. Diese erhält Daten über den momentanen Kurvenwinkel des Zugfahrzeugs 1. Dieser wird idealerweise direkt vom ESP bezogen, da dort der aktuelle Kurvenwinkel des Zugfahrzeugs sowohl bei stabiler als auch bei instabiler Fahrt verfügbar ist. Das ESP berechnet modellbasiert den aktuellen Kurvenwinkel aus dem Lenkwinkelsensor (Fahrerwunsch) und dem Gierratensensor (tatsächliche Kurvenbewegung). Erfindungsgemäß prüft die Auswerteeinheit 13 aus einer vorbestimmten Winkelverhältnisbeziehung zwischen Kurvenwinkel und Ausrichtungswinkel, ob die momentan gemessenen Winkel auf eine kritische Fahrsituation hindeuten. Eine solche kritische Fahrsituation wäre beispielsweise gegeben, wenn der Gierwinkel des Anhängers über 10% von dem für eine stabile Kurvenfahrt vorgesehenen Wert bei dem momentan gemessenen Lenkwinkel abweicht.

Wenn eine kritische Fahrsituation erkannt wird, übermittelt die Auswerteeinheit 13 entsprechende Signale zu Schnittstellen 17, an die Ausgabe- und/ oder Aktuatoreinheiten 19 angeschlossen sind. Diese Einheiten 19 sind beispielsweise ein Display, ein Lautsprecher des im Kraftfahrzeug sowieso vorhandenen Audiosystems, eine automatische Bremsregelung oder eine automatische Beschleunigungsregelung beim Zugfahrzeug 1. So werden bei Empfang der Signale für eine kritische Fahrsituation vorbestimmte Maßnahmen zur Vermeidung von Unfällen eingeleitet. Solche Maßnahmen sind zum Beispiel ein Warnzeichen auf dem Display, eine hörbare Warnmeldung (s. weiter oben), ein automatisches Abbremsen, Gegenlenken, oder Gaswegnehmen.

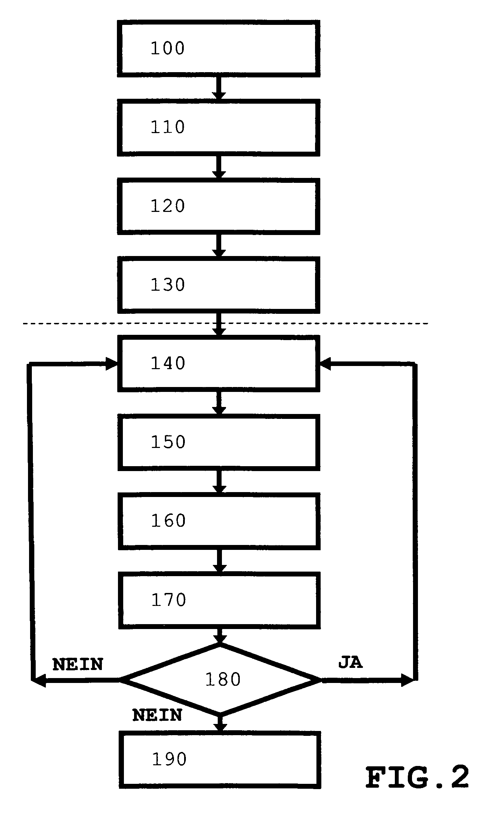

In **Fig. 2** ist ein Flussdiagramm eines Ausführungsbeispiels des erfindungsgemäßen Verfahrens dargestellt. Die ersten vier Verfahrensschritte dienen der Initialisierung des Systems. Im Schritt 100 wird die Nullstellung des Gierwinkels zwischen Zugfahrzeug und Anhänger bei einer Kalibrierungsfahrt ermittelt. Dabei fährt das Gespann längere Zeit mit niedriger Geschwindigkeit geradeaus. Während dessen nimmt die Kamera-Einrichtung 5 in Schritt 110 ein Bild des Anhängerkupplungsbereichs mit der Deichsel auf, welches im Schritt 120 als Template mit der definierten Ausrichtung des Gierwinkels Null im Auswertesubsystem 7 abgespeichert wird. Weitere Templates werden zu verschiedenen fixen Kurvenradien berechnet oder aufgenommen, was Rechenzeit spart.

Daraufhin erfolgt in Schritt 130 eine Kalibrierungsfahrt zur Bestimmung der Deichsellänge. Die Deichsellänge ist zur Berechnung von Instabilitäten der Anhängerbewegungen notwendig, denn sie geht in die Winkelverhältnisbeziehung zwischen Anhänger-Gierwinkel und Lenkwinkel des Zugfahrzeugs mit ein. Aus dieser Winkelverhältnisbeziehung lässt sich erfindungsgemäß erkennen, ob der aktuelle Gierwinkel zum aktuellen Lenkwinkel passt, d.h. ob sich der Anhänger in einer stabilen Spur befindet, oder sich bereits instabil um die Anhängerkupplung zu "drehen" begonnen hat. Die Deichsellänge wird bei einer stabilen Kurvenfahrt bei niedriger Geschwindigkeit als letzte unbestimmte Größe der folgenden Winkelverhältnisbeziehung aus der folgenden Formel ermittelt, wobei Gier- und Lenkwinkel und daraus berechenbar der Kurvenradius, bekannt sind.

$$\alpha_D = \arcsin \frac{L_D}{\sqrt{(\frac{L_R}{\tan\alpha_L})^2 + L_K{}^2}} + \arctan \frac{L_K \cdot \tan\alpha_L}{L_R}$$

wobei

$\alpha_D$ : Anhänger-Gierwinkel
$L_D$ : Deichsellänge
$L_R$ : Radstand des Zugfahrzeugs (bekannt)
$\alpha_L$ : Kurvenwinkel des Zugfahrzeugs
$L_K$ : Abstand Anhängerkupplung von der Hinterachse des Zugfahrzeugs (bekannt)

Die Initialisierung ist für beliebige Anhängertypen durchführbar, ohne dass Daten des Anhängers per Hand in das System eingegeben werden müssen. Dies erhöht den Benutzerkomfort und die Akzeptanz des Systems beim Verbraucher, der oft möglichst wenige technische Details wissen will und vor der Gefahr falscher manueller Eingaben geschützt werden sollte.

Nach Abschluss dieser Initialisierungsphase ist das System einsatzbereit. In Schritt 140 erfasst die Kamera-Einrichtung bildlich die momentane Ausrichtung der Deichsel zum Anhängerkupplungsbereich des Zugfahrzeugs in einem permanenten Betriebsmodus. Auf Basis dieser digitalen Bilder, wird im Schritt 150 erfindungsgemäß eine Korrelation mit dem im System gespeicherten, den Gierwinkel Null definierenden Deichsel-Tamplate durchgeführt. Hierzu wird entweder das Deichsel-Template über den gesuchten Winkelbereich gedreht und jeweils ein Korrelationsmaß berechnet oder das aktuelle Kamerabild im Deichselumfeld um den jeweiligen Winkel transformiert. Das Maximum des Korrelationsmaßes gibt den aktuellen Gierwinkel in Kamerakoordinaten wieder. Dabei findet eine Plausibilisierung beispielsweise über ein Schwellwertverfahren statt. Stellt sich dabei heraus, dass das berechnete Korrelationsmaß nicht groß genug ist, so gilt das System momentan als "nicht verfügbar". Andernfalls ermittelt das System im Schritt 160 den momentanen Gierwinkel aus dem Ergebnis der Korrelation. Dabei transformiert es die Kamerakoordinaten (in Pixel) mittels der Kameraparameter, der Koordinaten der Anhängerkupplung und der Kameraeinbauposition und -orientierung in kartesische "Weltkoordinaten" (in mm), die durch die Längs-, Quer- und Hochachse beschrieben werden.

In Schritt 170 bestimmt ein Lenkwinkelsensor 15 den Lenkwinkel und übermittelt die Daten an die Auswerteeinheit 13, die in Schritt 180 erfindungsgemäß prüft, ob der ermittelte Gierwinkel im Verhältnis zum Lenkwinkel innerhalb von für eine stabile Kurvenfahrt oder Geradeausfahrt vorbestimmten, erlaubten Grenzen liegt. Dabei wird von der oben aufgeführten Winkelverhältnisbeziehung für eine stabile Kurvenfahrt ausgegangen. Die erlaubten Grenzen sind beispielsweise eine Abweichung des gemessenen Gierwinkels von weniger als 10% zu dem nach der obigen Formel für den momentanen Lenkwinkel berechneten Gierwinkel.

Wird bei einem momentanen Gierwinkel ein Überschreiten dieser Grenzen festgestellt, siehe den NEIN-Zweig aus Entscheidung 180, leitet das System in Schritt 190 Maßnahmen - beispielsweise durch Ausgeben eines dedizierten Steuersignals an eine übergeordnetes Überwachungssystem für die Fahrdynamik - zur Vermeidung von Unfällen ein, wie beispielsweise akustische Warnsignale, oder das Triggern eines im Stand der Technik bekannten Überwachungsregelkreises, der die Soll- /Ist- Abweichung des Gierwinkels ausregelt. Unabhängig davon - siehe die beidseitigen feedback Pfeile aus Schritt 180 zurück zu Schritt 140 - überwacht das System während des Fahrbetriebes ständig weiter den Anhänger-Gierwinkel. Bei der nächsten Iteration beginnt mit Schritt 140 der zeitlich nächste Auswerteschritt, bei dem ein später aufgenommenes Kamerabild analog zur obigen Beschreibung verarbeitet wird. Je nach Rechenleistung des Auswertesubsystems und der Bildrate der Rückfahrkamera kann die Auswertefrequenz festgelegt werden. Ein sinnvoller Wert liegt etwa bei 25 Auswertungen pro Sekunde, vorteilhafterweise unter Ausnutzung der vollen Bildrate.

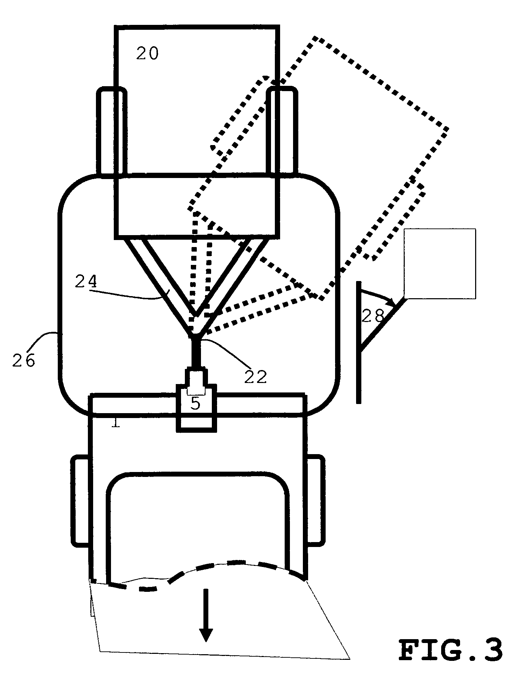

In **Fig. 3** ist eine Teilansicht des Gespanns mit einer Anhängerdeichsel 24 aus der Vogelperspektive zur Darstellung eines Beispiels der erfindungsgemäßen Erfassung des Gierwinkels 28 schematisch skizziert.

Am Heck des Zugfahrzeugs 1 befindet sich eine fest montierte Anhängerkupplung 22. Ein Anhänger 20, beispielsweise ein Wohnwagen ist mit seiner V-förmigen Deichsel 24 an die Anhängerkupplung 22 angekoppelt. Eine im Heck des Zugfahrzeugs 1 eingebaute Kamera-Einrichtung 5 des erfindungsgemäßen Systems erfasst bildlich einen Bereich 26, in dem sich die Anhängerkupplung 22 und die Deichsel befinden. Wenn die Kamera relativ weit oben angebracht ist, so schaut sie entsprechend schräg nach unten.

Gerät der Anhänger 20 während der Fahrt des Zugfahrzeugs 1 ins Schleudern oder bricht aus, erfasst die Kamera 5 die entsprechende Lage der Deichsel 24 relativ zum Zugfahrzeug 1. In gestrichelten Linien ist beispielsweise eine Auslenkung des Anhängers 20 mit einem Gierwinkel 28 von etwa dreißig Grad eingezeichnet. Dieser Gierwinkel 28 wird erfindungsgemäß mittels Template-Matching bestimmt.

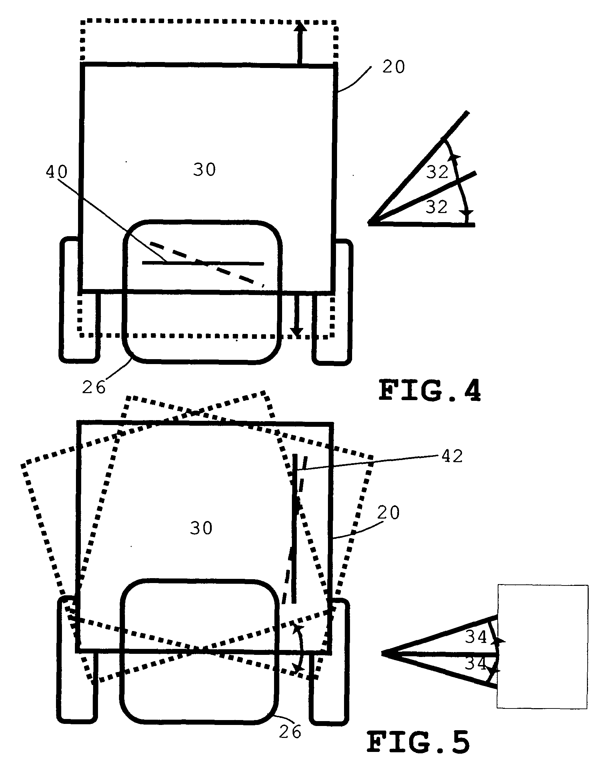

In **Fig. 4** ist die Frontwand 30 eines angekoppelten Anhängers 20 zur Darstellung eines Beispiels der erfindungsgemäßen Erfassung des Nickwinkels 32 schematisch skizziert.

Das Kamerabild erfasst vom Zugfahrzeug aus einen Ausschnitt 26 der Frontwand 30 eines angekoppelten Anhängers 20. Die Berechnung des Nickwinkels 32 erfolgt auf Basis der Parallelverschiebung der Unterkante des Aufbaus des Anhängers 20. Mit dem Abstand von Anhängerkupplung zur Anhängerfrontwand 30 lässt sich so der Nickwinkel 32 relativ zum Zugfahrzeug ermitteln. Beispielsweise ist jeweils ein Höhenversatz von Unterkante bzw. Oberkante des Anhängers durch eine Nickbewegung des Anhängers 20 nach oben und nach unten während der Fahrt in gestrichelten Linien dargestellt. Eine Warnung erfolgt, wenn mittels des erfindungsgemäßen Template-Matching eine zu große Oszillation des Nickwinkels 32 erkannt wird, wie sie etwa bei relativ leichten Anhängern, hohen Geschwindigkeiten, unebener Fahrbahn, oder rutschenden Lasten im Anhänger - einmalige Änderung - vorkommen können. Die Bestimmung des Nickwinkels kann im Allgemeinen nur erfolgen, wenn zuvor der Gierwinkel bekannt ist.

In **Fig. 5** ist schematisch einer Anhängerfrontwand 30 zur Darstellung eines Beispiels der erfindungsgemäßen Erfassung des Wankwinkels 34 skizziert.

Die Schräglage der Aufbauten des Anhängers 20 relativ zum Zugfahrzeug wird über eine in dessen Heck eingebaute Kamera-Einrichtung durch Auswertung der Position der Unterkante des Anhängers 20 oder anderer signifikanter Punkte der Anhängerfrontwand 30 erfindungsgemäß mit Hilfe von Tamplate-Matching ermittelt. Mit dem Abstand von Anhängerkupplung zur Anhängerfrontwand 30 und dem wegen geometrischer Abhängigkeit erforderlichen Gierwinkel lässt sich so der Wankwinkel 34 relativ zum Zugfahrzeug bestimmen. Beispielsweise ist jeweils eine Schräglage nach rechts und nach links durch Kippbewegungen des Anhängers 20 während der Fahrt in gestrichelten Linien dargestellt. Eine Warnung erfolgt, wenn ein für eine stabile Lage zu großer Wert des Wankwinkels 34 erkannt wird, beispielsweise etwa ab einem Winkel von 10 Grad.

Mit weiterem Bezug zu **Fig. 4 und Fig. 5** wird im Folgenden eine Variante zur reinen Grauwertbildverarbeitung durch Matching mit Deichseltemplates als weiteres Ausführungsbeispiel gegeben. Dabei wird ein System mit aktiver Beleuchtung eingesetzt und ein so genanntes Lichtschnittverfahren durchgeführt. Grundlegende Informationen dazu sind in den folgenden Quellen erhältlich:

Schmalz, G.: Technische Oberflächenkunde, Berlin: Springer-Verlag, 1936, S. 75, oder

Haug, K.: Laser-Lichtschnittsensorik für die Automatisierung von Metall-Schutzgas-Schweißprozessen, Dissertation Universität Stuttgart, Jost Jetter Verlag, Heimsheim, 2002, oder

Heckel, W.: Optische 3D-Konturerfassung und on-line Biegewinkelmessung mit dem Lichtschnittverfahren. Diss. Uni Erlangen-Nürnberg, Carl Hanser Verlag, 1995.

Dabei wird mindestens ein Linienprojektor zur aktiven Beleuchtung eingesetzt. Dieser kann beispielsweise aus einer Laserdiode mit vorgeschalteter Linienoptik in Form einer Zylinderlinse realisiert werden. Der Lichtschnittsensor wird dann aus Linienprojektor und Rückfahrkamera gebildet. Der Linienprojektor kann dabei in vorteilhafter Weise in Rückleuchte/Rückfahrscheinwerfer, in andere Sensoren, etwa in Ultraschall-Parkpilotsensoren oder in andere bereits vorhandene Funktionsgruppen integriert sein.

Zur Messung des Gierwinkels wird die Beleuchtungsebene des Linienprojektors idealerweise waagrecht gewählt oder enthält eine waagrechte Komponente. Zur Messung des Nickwinkels wird ein zweiter Linienprojektor gewählt, dessen Messebene senkrecht steht. Die Rückfahrkamera darf in beiden Fällen prinzipbedingt nicht in der Messebene liegen. Vorteilhaft ist in beiden Fällen ein großer Grundabstand zwischen Rückfahrkamera und Linienprojektor, so dass dieser z.B. in den Stoßfänger integriert ausgeführt ist, während die Rückfahrkamera oberhalb des Nummernschilds in die Heckklappe integriert ausgeführt ist. Die Lichtlinienprojektoren für Nick- und Wankwinkel können kombiniert werden, z.B. durch Einsatz eines Kreuzprojektors. Die Kamera schaut im beschriebenen Ausführungsbeispiel z.B. mit 45° gegenüber der Horizontalen nach unten. Das Blickfeld ist symmetrisch zur Längsachse.

Die projizierte Laserlinie wird für die Kamera an der Frontwand des Anhängers als Lichtschnittlinie sichtbar. Die Laserlinie kann sowohl im sichtbaren als auch im Infraroten (Vorteil: für Menschen nicht sichtbar, dadurch aber auch gefährlicher) gewählt werden, wobei die spektrale Empfindlichkeit der Rückfahrkamera die gewählte Wellenlänge unterstützen muss. Aufgrund der bekannten Relativposition zwischen Rückfahrkamera und Linienprojektor kann die Linienposition von Kamerakoordinaten in Weltkoordinaten transformiert werden.

Je nach der Ausrichtung der Lichtschnittlinie ist deren Bild für die Zwecke der vorliegenden Erfindung auswertbar, so, wie es das Bild der Deichsel in dem vorhergehenden Beispiel war. In Fig. 4 ist eine waagerechte Linie 40 zur Gierwinkelmessung und in Fig. 5 eine senkrechte Laserlichtschnittlinie 42 zur Nickwinkelmessung eingezeichnet. Eine Wankwinkelmessung ist nicht auf Basis auf die Anhängerfrontwand projizierter Linien möglich, da sich die Ebene der Anhängerfrontwand nicht in Abhängigkeit vom Wankwinkel ändert. Eine Wankwinkelmessung auf Lichtschnittbasis ist aber möglich, wenn waagrechte Flächen am Anhänger vom Zugfahrzeug aus mit einem Linienprojektor beleuchtet werden können.

Ändert sich in **Fig. 4** der Gierwinkel von Null beispielsweise auf einen Wert von etwa 20 Grad, so ergibt sich eine sichtbare Drehung der Laserlichtschnittlinie 40 um einen Winkel, der neben dem Gierwinkel von der Relativposition und -orientierung zwischen Rückfahrkamera und Projektor abhängt.

Dieses neue, gestrichelte eingezeichnete Linienbild ist nun mittels Linienmatching auswertbar zur Ermittlung des Gierwinkels, vergleichbar zur oben gegebenen Beschreibung des aktuellen Deichselbildes (Deichselmatching). Sie ist nach einer Transformation in Weltkoordinaten ebenfalls auswertbar zur Ermittlung des Nick- und des Wankwinkels.

In Fig. 5 wird die senkrecht gezeichnete Lichtschnittlinie 42 ausgewertet zur Ermittlung des Nickwinkels, sofern die Kamera und der Projektor nicht senkrecht übereinander angeordnet sind. Es ergibt sich bei Variation des Nickwinkels die gestrichelt gezeichnete Schnittlinie zur erfindungsgemäßen Auswertung und Weiterverarbeitung wie oben geschildert.

Wenn die Auswertung einer Lichtschnittlinie bereits ein eindeutig interpretierbares Ergebnis bei der Bestimmung eines Winkels (Gier-, Nick- oder Wank) liefert, benötigt man keine weitere Auswertung. Ist sie nicht eindeutig, etwa weil der in Fig. 4 eingezeichnete Verlauf des Linienbildes auch bei Geradeausfahrt und Wankwinkel ungleich Null eintreten kann, so sollte eine zusätzliche Auswertung -etwa durch Einbeziehung des Lenkwinkels, der Gierrate, Matching der Deichseltemplates, etc., vorgenommen werden, bis die Aussage über den gewünschten Winkel eindeutig ist. Das Lichtschnittverfahren lässt sich vorteilhaft bei Dunkelheit einsetzen, da es unabhängig von der Tageshelligkeit funktioniert.

Weiter ist die linienhafte Information leicht aus dem Kamerabild extrahierbar und mit wenig Rechenaufwand auswertbar, und es besteht eine hohe Detektionssicherheit. Es kann alternativ oder in Ergänzung des Deichseltemplate Matching eingesetzt werden.

Vorteilhaft ist auch, dass die Messungen von Gier- und Nickwinkel entkoppelt sind. Der Nickwinkel ist vorteilhafterweise auch nicht an die Erkennbarkeit der Anhängerunterkante und an eine zu bestimmende Deichsellänge gekoppelt, sondern kann direkt bestimmt werden.

Obwohl die vorliegende Erfindung anhand von bevorzugten Ausführungsbeispielen vorstehend beschrieben wurde, ist sie darauf nicht beschränkt, sondern auf vielfältige Weise modifizierbar.

Beispielsweise kann die Kamera-Einrichtung bei Fahrten ohne Anhänger als normale Rückfahrkamera eingerichtet sein. Vorteilhafter Weise wird immer nur eine Software in das Steuergerät der Kamera geladen: Ist die konventionelle Rückfahrkamera aktiv (aktiviert über Rückwärtsgang), dann wird die konventionelle Rückfahrkamera-Software aus dem nichtflüchtigen Speicher ins RAM geladen. Ist die Anhängerüberwachung aktiv (aktiviert über erkannten Anhänger wie in der deutschen Patentanmeldung DE 1 99 01 953 beschrieben), dann wird die Anhängerüberwachungssoftware geladen. Die Ladezeit von wenigen 100 ms stört dabei nicht. Dabei ergibt sich der Vorteil, dass nicht zwei Softwarefunktionen gleichzeitig im Speicher gehalten werden brauchen, was Speicherplatz und Rechenressourcen einspart.

Auch ist eine Unterstützung des erfindungsgemäßen Systems mit anderen Sensoren wie zum Beispiel Ultraschallsensoren oder Neigungssensoren möglich. Damit kann zusätzliche Information zur Plausibilisierung eingeholt werden.

Des Weiteren kann durch zeitliches Differenzieren aus den ermittelten Winkelwerten die Winkelbeschleunigungen abgeleitet werden, die ebenfalls für Warnstrategien herangezogen werden können.

Der Matchvorgang kann auch variiert werden, indem bei der Korrelation entweder das Kamerabild rotiert und mit einem oder mehreren fixen Templates verglichen wird, oder indem ein festes Template oder das günstigste Template mit der geringsten Winkelabweichung rotiert wird und mit dem Kamerabild verglichen wird oder eine Kombination dieser Maßnahmen durchgeführt wird.

Natürlich kann das erfindungsgemäße Verfahren auch von einer Kamera 5 unterstützt werden, die auf dem Anhängerfrontbereich montiert ist und auf die Deichsel und das Heck des Zugfahrzeugs schaut.

Schließlich können die Merkmale der Unteransprüche im wesentlichen frei miteinander und nicht durch die in den Ansprüchen vorliegende Reihenfolge miteinander kombiniert werden, sofern sie unabhängig voneinander sind.

**Patentansprüche**

1. System (3) zur Überwachung von Kraftfahrzeuganhängern (20) im Fahrbetrieb, mit einer

   a) Kamera-Einrichtung (5) zur bildlichen Erfassung der relativen Ausrichtung von Zugfahrzeugheckbereich und Anhängerfrontbereich,
   b) einem Auswertesubsystem (7), für die erfassten Daten
   c) und Schnittstellen (17) zur fahrbetriebsrelevanten Weiterverarbeitung der ausgewerteten Daten,

   **dadurch gekennzeichnet, dass** in dem Auswertesubsystem (7) ein oder mehrere, jeweils eine bestimmte relative Ausrichtung definierende Templates gespeichert sind, die dem Auswertesubsystem (7) als Referenzdaten für zugehörige Ausrichtungswinkel des Fahrzeuggespanns dienen, und das Auswertesubsystem (7) durch Programmierung eingerichtet ist zur Durchführung von Korrelationen zwischen Bildern (26) der jeweils aktuell erfassten, relativen Ausrichtung und des/den Templates(n), um Informationen über den momentanen Ausrichtungswinkel (28, 32, 34) zwischen den Längs- und/oder Querachsen und/oder Hochachsen von Zugfahrzeug (1) und Anhänger (20) zu bestimmen, und um Ausrichtungswinkel (28, 32, 34), die auf eine kritische Fahrsituation hindeuten, zu erkennen, und um entsprechende Signale an die Schnittstellen (17) zur fahrbetriebsrelevanten Weiterverarbeitung zu übermitteln.

2. System (3) nach Anspruch 1, wobei in dem Auswertesubsystem (7) eine Vielzahl, unterschiedliche Ausrichtungen definierende Templates zum Abgleich bei der Korrelation mit einem momentanen Kamerabild (26) gespeichert sind.

3. System (3) nach Anspruch 1 oder 2, wobei das System eine Einrichtung (15) zur Erfassung des momentanen Lenkwinkels enthält.

4. System (3) nach einem der Ansprüche 1 bis 3, wobei die erfassten Winkelinformationen (28, 32, 34) Informationen über den momentanen Gierwinkel (28) zwischen den Längsachsen von Zugfahrzeug (1) und Anhänger (20) enthalten.

5.  System (3) nach einem der Ansprüche 1 bis 4, wobei die bildliche Erfassung durch die Kamera-Einrichtung den Anhängerkupplungsbereich (22) des Zugfahrzeugheckbereichs und einen Teil der Deichsel (24) des Anhängerfrontbereichs umfasst.

6.  System (3) nach einem der Ansprüche 1 bis 5, wobei die erfassten Winkelinformationen (28, 32, 34) Informationen über den momentanen Wankwinkel (34) zwischen den Querachsen von Zugfahrzeug (1) und Anhänger (20) enthalten.

7.  System (3) nach einem der Ansprüche 1 bis 6, wobei die erfassten Winkelinformationen (28, 32, 34) Informationen über den momentanen Nickwinkel (32) zwischen den Längsachsen von Zugfahrzeug (1) und Anhänger (20) enthalten.

8.  System (3) nach Anspruch 6 oder 7, wobei das Template-Matching signifikante Punkte und/oder Linien eines von der Kamera-Einrichtung (5) erfassten Ausschnitts der gegenüberliegenden Wand eines Fahrzeugs (1, 20) des Zuggespanns umfasst.

9.  System (3) nach einem der Ansprüche 1 bis 8, wobei es einen Lichtschnittprojektor enthält und dazu eingerichtet ist, die von ihm erzeugten Bilder (40, 42) im Anhängerfrontbereich oder Zugfahrzeugheckbereich auszuwerten.

10. System (3) nach dem vorstehenden Anspruch, wobei der Lichtschnittprojektor in einer am Kraftfahrzeug ohnehin vorhandenen Funktionsgruppe integriert ausgeführt ist.

11. Verfahren zur Überwachung von Kraftfahrzeuganhängern (20) im Fahrbetrieb, wobei die relative Ausrichtung von Zugfahrzeugheckbereich und Anhängerfrontbereich programmgesteuert und kameragestützt erfasst wird, **gekennzeichnet durch** die Schritte,

    a) Ermitteln (140, 150, 160) eines momentanen Ausrichtungswinkels (28, 32, 34) zwischen den Längsachsen und/oder Querachsen und/ oder Hochachsen von Zugfahrzeug (1) und Anhänger (20) mittels Template-Matching,
    b) Prüfen (180), ob der ermittelte Ausrichtungswinkel (28, 32, 34) innerhalb von für eine stabile Fahrt des Fahrzeuggespanns vorbestimmten, erlaubten Grenzen liegt, und
    c) Einleiten (190) einer vorbestimmten Maßnahme zur Vermeidung von Unfällen, wenn der ermittelte Ausrichtungswinkel (28, 32, 34) außerhalb der erlaubten Grenzen liegt.

12. Verfahren nach dem vorstehenden Anspruch,
    enthaltend den weiteren Schritt:

    d) Ermitteln (170) des momentanen Lenkwinkels des Zugfahrzeugs,
    e) wobei das Prüfen (180) in Schritt b) die Feststellung umfasst, ob der Gierwinkel (28) im Verhältnis zum Lenkwinkel innerhalb von für eine stabile Kurvenfahrt vorbestimmten, erlaubten Grenzen liegt.

13. Verfahren nach Anspruch 11, wobei die in der Winkelverhältnisbeziehung des Schritts b) eingehende Deichsellänge mit Hilfe nach den vorangehenden Verfahrensschritten ermittelten Gier- (28) und Lenkwinkel während einer stabilen Kurvenfahrt bestimmt wird.

14. Verfahren nach Anspruch 11, wobei beim Erkennen des Vorhandenseins eines Anhängers automatisch die entsprechende Software zur Durchführung der Schritte nach einem der Ansprüche 11 bis 13 in das Steuergerät einer Rückfahrkamera geladen wird, und die Software automatisch entladen und durch die Software der Rückfahrkamera ersetzt wird, wenn der Rückwärtsgang eingelegt wird.


**Claims**

1.  System (3) for monitoring motor vehicle trailers (20) in the driving mode, having

    a) a camera device (5) for photographically recording the relative orientation of the rear region of the towing vehicle and the front region of the trailer,
b) an evaluation subsystem (7) for the recorded data,
c) and interfaces (17) for further processing the evaluated data in a way which is relevant to the driving mode,

**characterized in that** one or more templates which each define a specific relative orientation are stored in the evaluation subsystem (7), said orientation serving the evaluation subsystem (7) as reference data for associated orientation angles of the vehicle combination, and the evaluation subsystem (7) is configured by programming to carry out correlations between images (26) of the respective currently recorded, relative orientation and the template or templates in order to determine information about the instantaneous orientation angle (28, 32, 34) between the longitudinal axes and/or transverse axes and/or vertical axes of the towing vehicle (1) and trailer (20), and in order to detect orientation angles (28, 32, 34) which indicate a critical driving situation, and in order to pass on corresponding signals to the interfaces (17) for further processing in a way which is relevant to the driving mode.

2. System (3) according to Claim 1, a multiplicity of templates which define different orientations being stored in the evaluation subsystem (7) for matching during the correlation to an instantaneous camera image (26).

3. System (3) according to Claim 1 or 2, the system containing a device (15) for recording the instantaneous steering angle.

4. System (3) according to one of Claims 1 to 3, the recorded angle information (28, 32, 34) containing information about the instantaneous yaw angle (28) between the longitudinal axes of the towing vehicle (1) and the trailer (20).

5. System (3) according to one of Claims 1 to 4, the photographic recording by the camera device comprising the trailer coupling region (22) of the rear region of the towing vehicle and part of the towbar (24) of the front region of the trailer.

6. System (3) according to one of Claims 1 to 5, the recorded angle information (28, 32, 34) containing information about the instantaneous roll angle (34) between the transverse axes of the towing vehicle (1) and trailer (20).

7. System (3) according to one of Claims 1 to 6, the recorded angle information (28, 32, 34) containing information about the instantaneous pitch angle (32) between the longitudinal axes of the towing vehicle (1) and the trailer (20).

8. System (3) according to Claim 6 or 7, the template matching comprising significant points and/or lines of a portion, recorded by the camera device (5), of the opposite wall of a vehicle (1, 20) of the towing combination.

9. System (3) according to one of Claims 1 to 8, said system (3) containing a light section projector and being configured to evaluate the images (40, 42) generated by it in the front region of the trailer or the rear region of the towing vehicle.

10. System (3) according to the preceding claim, the light section projector being embodied integrated in a function group which is present in any case on the motor vehicle.

11. Method for monitoring motor vehicle trailers (20) in the driving mode, the relative orientation of the rear region of the towing vehicle and the front region of the trailer being recorded in a program-controlled and camera-supported fashion, **characterized by** the steps:

a) determination (140, 150, 160) of an instantaneous orientation angle (28, 32, 34) between the longitudinal axes and/or transverse axes and/or vertical axes of the towing vehicle (1) and trailer (20) by means of template matching,
b) checking (180) whether the recorded orientation angle (28, 32, 34) lies within permitted limits which are predetermined for stable travel of the vehicle combination, and
c) initiation (190) of a predetermined measure for avoiding accidents if the determined orientation angle (28, 32, 34) lies outside the permitted limits.

12. Method according to the preceding claim, containing the further step:

d) determination (170) of the instantaneous steering angle of the towing vehicle,
e) the checking (180) in step b) including the detection whether the ratio of the yaw angle (28) to the steering angle lies within permitted limits which are predetermined for stable cornering.

**13.** Method according to Claim 11, the length of the towbar which is included in the proportional angle relationship of step b) being determined using yaw angles (28) and steering angles determined using the preceding method steps during stable cornering.

**14.** Method according to Claim 11, wherein, when the presence of a trailer is detected, the corresponding software for carrying out the steps according to one of Claims 11 to 13 is loaded automatically into the control device of a reversing camera, and the software is unloaded automatically and replaced by the software for the reversing camera when the reverse gear is engaged.

**Revendications**

**1.** Système (3) pour surveiller des remorques de véhicules (20) en conduite véhicule, comportant :

   a) un dispositif de caméra (5) pour l'enregistrement en images de l'orientation relative de la partie arrière du tracteur et de la partie avant de la remorque,
   b) un sous-système d'évaluation (7) des données enregistrées,
   c) et des interfaces (17) pour le traitement des données évaluées, pertinentes pour la conduite véhicule,

**caractérisé en ce que**
le sous-système d'évaluation (7) contient enregistrés un ou plusieurs gabarits définissant respectivement une certaine orientation relative, qui servent au sous-système d'évaluation (7) en tant que données de référence pour les angles d'orientation correspondants du train routier, et le sous-système d'évaluation (7) est préparé par programmation à effectuer des corrélations entre images (26) de l'orientation relative, respectivement enregistrée actuellement, et du/des gabarits, afin de déterminer des informations sur l'angle momentané d'orientation (28, 32, 34) entre les axes longitudinaux et/ou transversaux et/ou les axes verticaux du tracteur (1) et de la remorque et pour détecter des angles d'orientation (28, 32, 34) qui indiquent une situation de marche critique ainsi que pour transmettre des signaux adéquats aux interfaces (17) pour le traitement important pour la conduite véhicule.

**2.** Système (3) selon la revendication 1,
**caractérisé en ce qu'**
on enregistre dans le sous-système d'évaluation (7) une pluralité de gabarits définissant des orientations différentes pour équilibrage lors de la corrélation avec une image (26) momentanée de la caméra.

**3.** Système (3) selon la revendication 1 ou 2,
**caractérisé en ce que**
le système contient un dispositif (15) pour enregistrer l'angle momentané de braquage.

**4.** Système (3) selon l'une des revendications 1 à 3,
**caractérisé en ce que**
les informations enregistrées sur les angles (28, 32, 34) contiennent des informations sur l'angle momentané de lacet (28) entre les axes longitudinaux du tracteur (1) et de la remorque (20).

**5.** Système (3) selon l'une des revendications 1 à 4,
**caractérisé en ce que**
l'enregistrement sous forme d'images par le dispositif de caméra comprend la partie d'attelage de la remorque (22) de la partie arrière du tracteur et une partie du timon (24) de la partie avant de la remorque.

**6.** Système (3) selon l'une des revendications 1 à 5,
**caractérisé en ce que**
les informations enregistrées sur les angles (28, 32, 34) contiennent des informations sur l'angle momentané de roulis (34) entre les axes transversaux du tracteur (1) et de la remorque (20).

**7.** Système (3) selon l'une des revendications 1 à 6,
**caractérisé en ce que**
les informations enregistrées sur les angles (28, 32, 34) contiennent des informations sur l'angle momentané de tangage (32) entre les axes longitudinaux du tracteur (1) et de la remorque (20).

**8.** Système (3) selon la revendication 6 ou 7,
**caractérisé en ce que**
la comparaison des gabarits comprend des points et/ou des lignes significatifs d'une découpe, enregistrée par le dispositif de caméra (5), de la paroi opposée d'un véhicule (1, 20) du train routier.

**9.** Système (3) selon l'une des revendications 1 à 8,
**caractérisé en ce que**
celui-ci contient un projecteur à coupe optique et est agencé pour évaluer les images (40, 42) produites par lui dans la partie avant de la remorque ou la partie arrière du tracteur.

**10.** Système (3) selon la revendication précédente,
**caractérisé en ce que**
le projecteur à coupe optique est intégré et réalisé dans un groupe fonctionnel présent de toute façon sur le véhicule.

**11.** Procédé pour surveiller des remorques de véhicules (20) en conduite véhicule, dans lequel l'orientation relative de la partie arrière du tracteur et de la partie avant de la remorque est commandée par programme et est enregistrée avec l'assistance d'une caméra,
**caractérisé par**
les étapes consistant à :

a) déterminer (140, 150, 60) un angle momentané d'orientation (28, 32, 34) entre les axes longitudinaux et/ou les axes transversaux et/ou les axes verticaux du tracteur (1) et de la remorque (20) au moyen d'une comparaison de gabarits,
b) vérifier (180) si l'angle d'orientation déterminé (28, 32, 34) se situe à l'intérieur de limites permises, prédéterminées, pour une marche stable du train routier, et
c) introduire (190) une mesure prédéterminée pour éviter les accidents, lorsque l'angle d'orientation déterminé (28, 32, 34) se situe en dehors des limites permises.

**12.** Procédé selon la revendication précédente, comprenant d'autres étapes consistant à :

d) déterminer (170) l'angle momentané de braquage du tracteur, et
e) incluse dans la vérification (180) à l'étape b), l'étape consistant à constater si l'angle de lacet (28) par rapport à l'angle de braquage se situe à l'intérieur de limites permises, prédéterminées, pour une marche stable en courbe.

**13.** Procédé selon la revendication 11,
**caractérisé en ce que**
la longueur du timon entrant dans le rapport de proportion angulaire de l'étape b) est déterminé à l'aide des angles de lacet (28) et de braquage pendant une marche stable en courbe, déterminés par les étapes précédentes du procédé.

**14.** Procédé selon la revendication 11,
**caractérisé en ce que**
dès que la présence d'une remorque est détectée, le logiciel adéquat pour exécuter les étapes selon l'une des revendications 11 à 13 est chargé dans le dispositif de commande d'une caméra de marche arrière et le logiciel est automatiquement déchargé et remplacé par le logiciel de la caméra de marche arrière lorsque le rapport de marche arrière est engagé.

FIG.1

FIG.2

FIG.3

**FIG.4**

**FIG.5**